# EUROPÄISCHE PATENTSCHRIFT

(11) **EP 1 837 578 B1**
(45) Veröffentlichungstag und Bekanntmachung des Hinweises auf die Patenterteilung: **02.11.2011**
(21) Anmeldenummer: 06018706.9
(22) Anmeldetag: 06.09.2006
(51) Int. Cl.: F16L 27/02, F16L 27/047, E03C 1/04

(54) **Anschlussstutzen zum drehbaren Anschluss eines Sanitärschlauchs**
Connecting device for a rotatable connection with a sanitary hose
Embout de raccordement pour un racccordement rotatif d'un souple sanitaire

(30) Priorität: 24.03.2006 DE 102006013803
(43) Veröffentlichungstag der Anmeldung: 26.09.2007
(73) Patentinhaber: OLDOPLAST KUNSTSTOFFPROFILE GMBH & CO. KG, 45772 Marl (DE)
(72) Erfinder: Börgel, Helmut Vitus, 45772 Marl (DE)
(74) Vertreter: Bockhorni & Kollegen

(56) Entgegenhaltungen:
- DE-A1- 1 904 285
- DE-A1- 2 615 111
- DE-U1- 29 516 793
- DE-U1-202004 006 110
- DE-U1-202004 016 773
- FR-A- 2 790 055
- US-A- 2 049 141
- US-A- 2 085 854
- US-A- 4 275 908

## Beschreibung

Die Erfindung betrifft ein Sanitärschlauch gemäß dem Oberbegriff des Anspruchs 1, der an einem Brausekopf angeschlossen ist.

Anschlusskupplungen zum Befestigen eines Brausekopfs oder dgl., mit einem Sanitärschlauch werden in unterschiedlichsten Ausführungen angeboten. Dabei werden Sanitärschläuche mit einer drehbaren Anschlusskupplung vor allem in Bädern verwendet, wobei hier die Kupplung vorzugsweise zum drehbaren Anschluss einer Handbrause um die Sanitärschlauchachse dient. Die drehbare Befestigung der Handbrause am Sanitärschlauch erleichtert dabei die Handhabung der Handbrause, bzw. des Brausekopfes, da hierdurch während des Gebrauchs der Brause ein Verdrillen des Sanitärschlauchs vermieden wird und dadurch die Brause sich entsprechend der gewünschten Brausestellung um die Achse des Schlauches drehen lässt. Ist dagegen der Sanitärschlauch über eine Anschlusskupplung mit einer drehbaren Handbrause versehen, lässt sich diese um das Ende des Sanitärschlauches drehen und dadurch besser und bequemer handhaben.

In diesem Zusammenhang ist bereits eine Anschlusskupplung zum Befestigen eines Brausekopfes an einem Sanitärschlauch bekannt (DE 20 2004 016 773 U), die eine Überwurfmutter mit einem Lagerring aufweist, der die Innenbuchse drehbar fixiert. Diese drehbar fixierte Innenbuchse ist mit einer am Sanitärschlauch fest anliegenden Gewindehülse fest verbunden. Über eine derartige Anschlusskupplung kann der Sanitärschlauch an einem Brausekopf befestigt werden, in dem die Überwurfmutter mit ihrem Gewinde mit dem Brausekopfstutzen verschraubt wird.

Derartige Anschlusskupplungen zum Befestigen einer Handbrause haben sich bisher durchaus bewährt. Bei der Handhabung des Brausekopfs gestattet diese Ausführungsform ein einfaches axiales Drehen des Brausekopfs zur Längsachse des Anschlusses am Sanitärschlauch. Weitere axiale Drehungen in andere beliebige Achsen sind dabei allerdings nicht möglich, so dass in diesen Fällen der Sanitärschlauch starr in die anderen Richtungen mitgedreht und damit verwunden wird. Ein weiterer Nachteil von lediglich axial drehbaren Anschlusskupplungen besteht darin, dass immer dann, wenn die Brause aus ihrer Halterung abgenommen und manuell zum Abbrausen verwendet wird, im Bereich nahe des Anschlusses des Sanitärschlauchs ein Knick des Sanitärschlauchs auftritt. Daraus resultiert in der Regel eine damit einhergehende Querschnittsveränderung, so dass es dadurch zu einer Verringerung des Durchflussvolumens des Wassers durch den Sanitärschlauch oder dies sogar zu einem Verschluss des Sanitärschlauches an der Knickstelle führen kann. Dies führt naturgemäß zu einer unerwünschten und unangenehmen Situation für den Brausenden. Auch an den Stellen, an welcher der Brausekopf mit der sie aufnehmenden Halterung zu nahe an der Wand mit einer Haltevorrichtung in Form einer Duschstange angebracht ist, kann der zu geringe Abstand zwischen dem Anschluss der Anschlusskupplung zum Sanitärschlauch und zur Wand dazu führen, dass entweder der Sanitärschlauch eingeknickt wird oder dass der Brausekopf mit seiner Halterung sich an der Duschstange zur Seite dreht, so dass der Brausekopf nicht mehr senkrecht zur Wand ausgerichtet ist und sich somit aus dem Duschbereich des Brausenden hinausschwenkt.

Aufgabe der vorliegenden Erfindung ist es daher eine Anschlusskupplung einer Handbrause an einem Sanitärschlauch zur Verfügung zu stellen, die ein bequemes Handling des Brausekopfs ermöglicht und eine Knickung des Schlauches dabei weitgehend vermeidet.

Diese Aufgabe wird erfindungsgemäß durch die kennzeichnenden Merkmale des Anspruchs 1 gelöst, wobei zweckmäßige Weiterbildungen der Erfindung durch die Merkmale in den Unteransprüchen geschaffen werden.

Nach Maßgabe der Erfindung weist ein erfindungsgemäßer Sanitärschlauch eine zweiteilige Anschlusskupplung auf, deren Kupplungsteile mit einem Kugelgelenk miteinander verbunden sind, so dass eine Schwenkbewegung des einen Anschlusses relativ zum anderen nunmehr in einem Raumwinkelbereich neben der Drehung axial zur Schlauchlängsachse möglich wird. Das Kugelgelenk setzt sich zusammen aus einem Gelenklager und einem Kugelkopf, wobei der Kugelkopf vorzugsweise auf einem Zapfen befestigt ist und das Gelenklager den Kugelkopf umfasst. Sinnvollerweise können die beiden wesentlichen Teile des Kugelgelenks auf die beiden Baugruppen einer Anschlusskupplung zugeteilt werden. Dabei umfasst die erste Baugruppe den Anschluss für den Brausekopf und beispielsweise das Gelenklager, während die zweite Baugruppe den Anschluss für den Sanitärschlauch und den Zapfen mit dem Kugelkopf umfasst, wobei dies auch umgekehrt der Fall sein kann. Vorliegend hat man es somit mit einer räumlich schwenkbaren, aus zwei Baugruppen bestehenden Kupplung zu tun, so dass ein Abknicken und damit einhergehend eine Querschnittsveränderung bzw. Verringerung im Wesentlichen vermieden wird.

Die vorliegende Erfindung bringt somit mehrere Vorteile mit sich. Zum einen, wie bereits oben erwähnt, wird bei der Schwenkbewegung bei einer manuellen Handhabung ein Knicken der beteiligten Elemente vermieden. Zum anderen verbessert sich erheblich die Verschwenkbarkeit der Handbrause beim manuellen Abbrausen, da der Brausekopf viel beweglicher mit dem Sanitärschlauch verbunden ist und nun eine vielachsige Drehbewegung des Brausekopfs relativ zum Sanitärschlauch möglich ist. Somit liegt eine viel bessere Handhabung vor, die für den Brausenden komfortabler ist.

Nach einer besonders bevorzugten Ausführungsform ist in seiner zweiten Baugruppe eine Hülse mit einer durchmesserreduzierten Fortsetzung in Form eines Zapfens vorgesehen, an dessen freien Ende ein Kugelkopf vorzugsweise über eine Schraubverbindung mit dem Zapfen verbunden ist. Andere Fügungen zwischen Zapfen und Kugelkopf, wie beispielsweise Presspassung, sind dabei ebenso möglich. Die Formgestaltung des Zapfens ist dabei vorzugsweise zylinderförmig, wobei auch andere Formgebungen, wie beispielsweise eine konusförmige Gestaltung, möglich sind. Sowohl der Kugelkopf als auch der Zapfen weisen konzentrisch zum Sanitärschlauch Durchgangsbohrungen auf, deren Innendurchmesser zweckmäßigerweise dem Innendurchmesser des Sanitärschlauches entsprechen. Dabei sollten vorzugsweise die Innendurchmesser der beiden Durchgangsbohrungen den Innendurchmesser des Sanitärschlauches nicht unterschreiten.

In einer besonders bevorzugten Ausführungsform umfasst die erste Baugruppe als aufnehmendes Element ein Anschlussteil, welches an seiner ersten Stirnseite ein Anschlussgewinde für den Brausekopf aufweist. Die zweite Stirnseite des Anschlussteils weist vorzugsweise konzentrisch eine teilkugelförmige Ausnehmung auf, um den Kugelkopf der zweiten Baugruppe aufzunehmen. Da die erste Baugruppe das Gelenklager umfasst, welches einen Kugelkopf aufnimmt, ist aus montagetechnischen Gründen das Gelenklager vorteilhaft zweiteilig gebildet, so dass eine axiale Montage/Demontage des Gelenklagers zwecks Aufnahme/Entnahme des Kugelkopfes möglich ist. Zwischen dem Innengewinde zum Anschließen des Brausekopfs und der teilkugelförmigen Ausnehmung des Gelenklagers, erstreckt sich eine weitere Durchgangsbohrung, vorzugsweise konzentrisch zur Längsachse der ersten Baugruppe. Da sich bei einer Schwenkbewegung der zweiten Baugruppe relativ zur ersten Baugruppe, die auf die senkrechte Ebene zur Längsachse der ersten Baugruppe projizierte Fläche der Durchgangsbohrung des Kugelkopfs, je nach Schwenkrichtung korrespondierend in der Projektionsebene bewegt, sollte die Durchgangsbohrung im Anschlussteil einen größeren Innendurchmesser als der Sanitärschlauch aufweisen. Damit wird gewährleistet, dass beim Schwenken der beiden Baugruppen relativ zueinander, das Durchflussvolumen erhalten bleibt, sofern der Innendurchmesser der Durchgangsbohrung im Anschlussteil groß genug gewählt ist, so dass der Durchfluss des in die erste Baugruppe einströmenden Wassers nicht behindert wird.

In einer bevorzugten Ausführungsform weist das Anschlussteil einen Dichtring auf, welcher den Kugelkopf zum Außenraum hin abdichtet. Zur Aufnahme des Dichtringes weist das Anschlussteil eine entsprechende radiale Ausnehmung auf. Vorzugsweise wird als Dichtring ein Radial-Wellendichtring oder Runddichtring verwendet, wobei weitere Ausführungsformen des Dichtrings möglich sind, beispielsweise durch Dichtringe mit mehreren Dichtlippen oder ähnliches.

In einer zweckmäßigen Weiterbildung weist das Anschlussteil einen Haltering auf, welcher den Kugelkopf gegen die teilkugelförmige Ausnehmung im Anschlussteil hält, so dass der Kugelkopf axial bezüglich der Längsachse der ersten Baugruppe unbeweglich aber drehbar in allen Achsen hält. Der Haltering wird dabei vorzugsweise über eine Schraubverbindung mit dem Anschlussteil befestigt. Auch in diesem Fall sind weitere Fügungsmöglichkeiten wie beispielsweise Presspassen möglich. Dabei schließt der Haltering den Dichtring zum Außenraum ab, in dem die Unterseite des Halterings auf dem Dichtring aufliegt und diesen überkragt. Ferner weist der Haltering an seiner äußeren und damit zur zweiten Baugruppe zeigenden Stirnseite, eine zum Brausekopfanschluss weisenden Innenkonus auf. Dabei ist die Kontur des kleineren der beiden Durchmesser des Innenkonus, der Kontur des Kugelkopfs angepasst und kleiner als der Kugelkopfdurchmesser. Im Zusammenschluss der teilkugelförmigen Ausnehmung, des Dichtrings und des Halteringes ergibt sich insgesamt im Innenraum des Anschlussteils das Gelenklager zur Aufnahme des Kugelkopfs der zweiten Baugruppe. Die zum Gelenklager weisende Innenkonusfläche dient als Anschlagsfläche für die Umfangsfläche des Zapfens, um so die räumliche Schwenkung der beiden Baugruppen relativ zueinander zu begrenzen. Dabei sind das Anschlussteil und der Haltering vorzugsweise aus Metall gefertigt.

Die Gruppe der Bauteile, welche vorzugsweise aus Metall gebildet sind, können dabei in Form von Drehteilen oder als Druckgussteile gefertigt sein. Dabei kann die Hülse mit reduziertem Durchmesser, sofern es als Drehteil gefertigt ist, direkt mit dem Kugelkopf am freien Ende des Zapfens einteilig hergestellt sein. Es ist ferner möglich, die Hülse mit reduziertem Durchmesser durch Tiefziehen herzustellen, wobei anschließend im nächsten Produktionsschritt die Gewinde im Innen- und Außenbereich gebohrt/geschnitten werden. Selbstverständlich könnten die benannten Teile bedarfsweise auch aus Kunststoff hergestellt sein, was aber zu einem Verspannen der Schraubflächen führen kann, insbesondere wenn enge Toleranzen gewählt werden.

Zweckmäßigerweise weist der Sanitärschlauch an seinem anzuschließenden Ende einen angespritzten Nippel auf, welcher mit einer nach außen vorstehenden radialen Schulter versehen ist. Die an den Nippel angrenzende Schraubhülse wird dabei von der radialen Schulter des Nippels überkragt, wobei die Schraubhülse vorzugsweise über eine Schraubverbindung mit einer weiteren Hülse verschraubt wird, die sich als Durchmesser reduzierter Zapfen fortsetzt und damit eine Verlängerung des Sanitärschlauches darstellt. Der angespritzte Nippel, welcher vorzugsweise aus Kunststoff gebildet ist, wird beim Einschrauben der Schraubhülse in die Hülse mit reduziertem Durchmesser an die innere Schulterfläche der Hülse gepresst, wodurch der Nippel den Sanitärschlauch zur Hülse radial abdichtet. Damit wird gewährleistet, dass das durch den Sanitärschlauch über die Hülse einströmende Wasser nicht seitlich in den Außenraum des Sanitärschlauchanschlusses der zweiten Baugruppe ausströmen kann. Dabei sind sowohl die Schraubhülse als auch die Hülse mit reduziertem Durchmesser vorzugsweise aus Metall gebildet.

Im Folgenden wird ein Ausführungsbeispiel der Erfindung anhand der Zeichnungen erläutert. Darin zeigen:
- Fig. 1: eine Schnittzeichnung der Anschlusskupplung in seiner Grundstellung;
- Fig. 2: eine Schnittzeichnung der Anschlusskupplung mit einer bis zum Anschlag geschwenkten zweiten Baugruppe B;

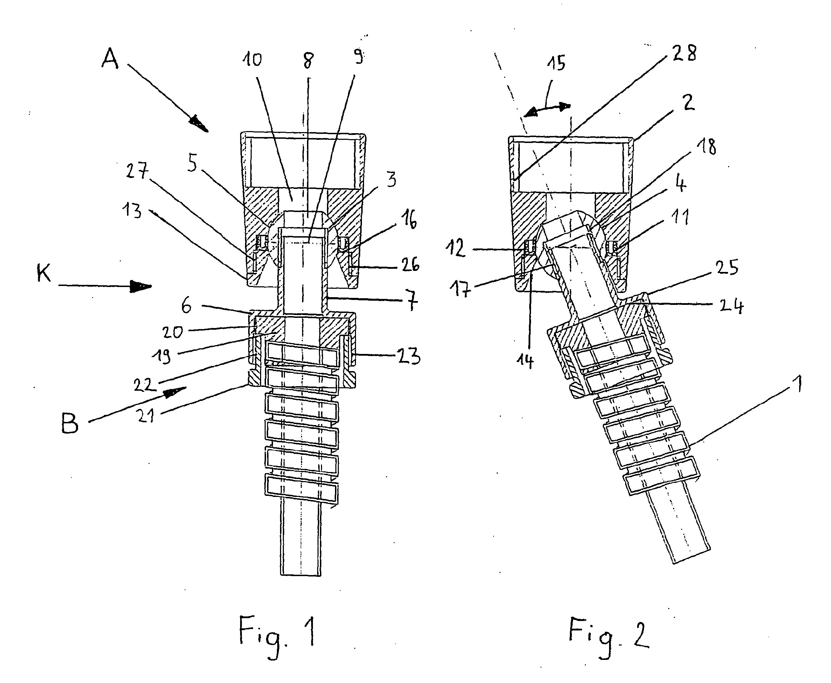

In Fig. 1 ist in der Schnittzeichnung die Anschlusskupplung K in ihrer Grundstellung gezeigt. Die Anschlusskupplung K lässt sich in zwei Baugruppen A und B unterteilen. In der Grundstellung der Anschlusskupplung K liegen die jeweiligen Längsachsen der beiden Baugruppen übereinander, so dass dies als gemeinsame Längsachse vorliegt. Die erste Baugruppe A umfasst als tragendes Bauteil das Anschlussteil 2. Das Anschlussteil 2 weist an seiner großen Stirnseite ein Innengewindeabschnitt 28 zum Anschließen des Brausekopfs auf. Die Durchgangsbohrung 10 hat dabei einen größeren Innendurchmesser als der Innendurchmesser des Sanitärschlauches 1. Die erste Baugruppe A umfasst das Gelenklager 4 des Kugelgelenkes.

Damit ein Kugelkopf 3 axial aus dem Gelenklager 4 eingesetzt/entnommen werden kann, ist das Gelenklager 4 zweiteilig aufgebaut, um den Montagearbeiten gerecht zu werden. Diesbezüglich setzt sich das Gelenklager 4 in der ersten Baugruppe A aus dem Anschlussteil 2 und dem Haltering 13 zusammen, welche zusammengesetzt in Verbindung mit dem Dichtring 11 insgesamt das Gelenklager 4 bilden. Das Anschlussteil 2 weist daher eine konzentrische teilkugelförmige Ausnehmung 5 auf, welche der Kontur des Kugelkopfes 3 entspricht. Zur Aufnahme des Dichtringes 11 weist das Anschlussteil 2 eine entsprechende radiale Ausnehmung 12 auf. In der radialen Ausnehmung 12 liegt der Dichtring 11, welcher in der bevorzugten Ausführungsform ein Radial-Wellendichtring ist, was in der Zeichnung angedeutet ist. Der Dichtring 11 dichtet den Kugelkopf 3 gegen das Anschlussteil 2 und gegen den Haltering 13 formschlüssig, und damit gegen den Außenraum ab, so dass das durch die Durchgangsbohrungen 8, 9 und 10 strömende Wasser nicht entgegen der Strömungsrichtung aus dem Anschlussteil 2 am Kugelkopf 3 entlang, zwischen dem Haltering 13 und dem Kugelkopf 3 entweichen kann. Der Haltering 13 weist einen Abschnitt mit einem Außengewinde 26 auf, der mit einem entsprechenden Innengewinde 27 des Anschlussteils 2 verschraubt ist. Der Haltering 13 dient dabei als zweite Teilkugelschale, so dass die Kontur des Kugelkopfes 3 von der ersten Baugruppe A über den Kugelkopfdurchmesser umfasst wird und der Kugelkopf der zweiten Baugruppe B somit axial translatorisch unbeweglich ist, aber in allen Achsen drehbar bleibt. Damit die beiden Baugruppen relativ zueinander räumlich schwenkbar sind, weist der Haltering 13 einen Innenkonus 14 auf, dessen Verjüngung zum Anschluss des Brausekopfes konzentrisch ausgerichtet ist und dessen Innenkontur 14 als Anschlagsfläche für die Umfangsfläche des Zapfens 7 der zweiten Baugruppe B dient. Der kleinere Durchmesser des Halteringes 13 ist dabei so strukturiert, dass sie der Lage und Kontur des Kugelkopfes 3 entspricht. Die Unterseite 16 des Halteringes 13 liegt dabei auf dem Dichtring 11 auf, und schließt so den Dichtring 11 gegen die äußere Umgebung ab.

Die zweite Baugruppe B weist den Kugelkopf 3 des Kugelgelenks und den Anschluss des Sanitärschlauchs 1 auf. Der Kugelkopf 3 weist eine Durchgangsbohrung 8 auf, dessen Innendurchmesser dem Innendurchmesser des Sanitärschlauchs 1 entspricht. Ferner ist dieser mit einem Innengewinde 18 versehen, über das es mit dem entsprechenden Außengewinde 17 der Hülse 6 verschraubt ist. Die Hülse 6 weist einen reduzierten Durchmesser auf, welcher zylinderförmig in Form eines Zapfens 7 mit dem Kugelkopf 3 verschraubt ist. Der Sanitärschlauch 1 weist einen angespritzten Nippel 19 auf, welcher mit einer nach außen vorstehenden radialen Schulter 20 versehen ist und dem Innendurchmesser des Schulterbereichs 25 der Hülse 6 entspricht. An der radialen Schulter 20 des Nippels 19 liegt eine auf dem Sanitärschlauch 1 sitzende Schraubhülse 21 anstoßend an, welche einen Außengewindeabschnitt 22 aufweist, die mit dem Innengewinde 23 der Hülse 6 korrespondiert und damit verschraubt ist. Die radiale Schulter 20 des Nippels 19 überkragt dabei das Außengewinde der Schraubhülse 21. Durch das Einschrauben der Schraubhülse 21 wird der Nippel 19 über die radiale Schulter 20 an die Innenfläche 24 der Hülse 6 im Schulterbereich 25 angedrückt, so dass der Sanitärschlauch 1 durch den Nippel 19 gegen die Hülse 6 abgedichtet wird.

Fig. 2 zeigt die Anschlusskupplung K in einer Schnittzeichnung, wobei die zweite Baugruppe B in der Zeichnungsebene um einen Winkelbereich 15 nach rechts bis zum Anschlag der Umfangsfläche des Zapfens 7 an die Innenkonusfläche 14 aufliegt. In der Zeichnung ist deutlich zu erkennen, dass das aus der zweiten Baugruppe B in die Durchgangsbohrung 10 der ersten Baugruppe A strömende Wasser, seine Richtung ändern muss. Aus der Sicht des einströmenden Wassers, strömt das Wasser aus der Durchgangsbohrung 8 der zweiten Baugruppe B auf ein Teil der Umfangsfläche der Durchgangsbohrung 10 der ersten Baugruppe A und wird so zur Richtungsänderung gezwungen und gelangt so aus dem Anschlussteil 2 der ersten Baugruppe A in den Brausekopf.

## Patentansprüche

1. Knickbarer Sanitärschlauch (1) mit Handbrause, die mit einem Brausekopf versehen und durch eine Anschlusskupplung am Sanitärschlauch angeschlossen ist, wobei die Anschlusskupplung (K) eine erste Baugruppe (A) zum Anschließen der Handbrause und eine zweite Baugruppe (B) zum Anschließen des Sanitärschlauches (1) umfasst, wobei die Handbrause mit dem Sanitärschlauch (1) durch die Anschlusskupplung (K) axial drehbar verbunden ist,
**dadurch gekennzeichnet, dass**
die Anschlusskupplung (K) ein Kugelgelenk aufweist, das einen Kugelkopf (3) und ein diesen Kugelkopf (3) aufnehmendes Gelenklager (4) umfasst, zur schwenkbaren Verbindung der beiden Baugruppen (A, B), derart, dass die beiden Baugruppen (A, B) der Anschlusskupplung (K) relativ zueinander räumlich schwenkbar sind.

2. Knickbarer Sanitärschlauch (1) nach Anspruch 1,
**dadurch gekennzeichnet, dass**
die erste Baugruppe (A) zum Anschließen der Handbrause das Gelenklager (4) und die zweite Baugruppe (B) zum Anschließen des Sanitärschlauches (1) den Kugelkopf (3) aufweist.

3. Knickbarer Sanitärschlauch (1) nach einem der o. g. Ansprüche,
**dadurch gekennzeichnet, dass**
die zweite Baugruppe (B) eine Hülse (6) umfasst, die sich als durchmesserreduzierter Zapfen (7) fortsetzt, an dem der Kugelkopf (3), vorzugsweise über eine Schraubverbindung, befestigt ist.

4. Knickbarer Sanitärschlauch (1) nach Anspruch 3,
**dadurch gekennzeichnet, dass**
der Kugelkopf (3) und der Zapfen (7) Durchgangsbohrungen (8, 9) aufweisen, deren Durchmesser mindestens dem Innendurchmesser des Sanitärschlauches (1) entsprechen.

5. Knickbarer Sanitärschlauch nach einem der o. g. Ansprüche,
**dadurch gekennzeichnet, dass**
die erste Baugruppe (A) ein Anschlussteil (2) umfasst, das eine zentrale Durchgangsbohrung (10) aufweist, dessen Innendurchmesser vorzugsweise größer ist, als der des Zapfens (7) und des Kugelkopfes (3).

6. Knickbarer Sanitärschlauch nach einem der o. g. Ansprüche,
**dadurch gekennzeichnet, dass**
das Anschlussteil (2) einen Gewindeabschnitt (28), vorzugsweise ein Innengewinde, zur Befestigung der Handbrause aufweist und eine konzentrisch angeordnete teilkugelförmige Ausnehmung (5) aufweist, die das Gelenklager (4) bildet, wobei sich zwischen diesem Gewindeabschnitt (28) und dieser Ausnehmung (5) die zentrale Durchgangsbohrung (10) erstreckt.

7. Knickbarer Sanitärschlauch einem der o. g. Ansprüche,
**dadurch gekennzeichnet, dass**
der Kugelkopf (3) im Gelenklager (4) des Anschlussteils (2) mit einem Dichtring (11), insbesondere Radial-Wellendichtring oder Runddichtring, zum Gelenklager (4) abgedichtet ist, wobei das Anschlussteil (2) zur Aufnahme des Dichtringes (11) eine entsprechende radiale Ausnehmung (12) aufweist.

8. Knickbarer Sanitärschlauch nach einem der o. g. Ansprüche,
**dadurch gekennzeichnet, dass**
der Kugelkopf (3) durch einen schraubbaren Haltering (13) gegen das Gelenklager (4) im Anschlussteil (2) gehalten wird, wobei der Haltering (13) vorzugsweise einen zum Gelenklager (4) weisenden Innenkonus (14) als Anschlagsfläche für den Zapfen (7) aufweist, um die räumliche Schwenkung der beiden Baugruppen (A, B) zu begrenzen.

9. Knickbarer Sanitärschlauch nach Anspruch 8,
**dadurch gekennzeichnet, dass**
der Haltering (13) den Dichtring (11) zum Schwenkbereich (15) hin abschließt, indem die Unterseite (16) des Halterings (13) auf dem Dichtring (11) aufliegt und diesen überkragt und der kleinere der beiden Durchmesser des Innenkonus (14) der Kontur des Kugelkopfes (3) entspricht und kleiner als der Kugelkopfdurchmesser ist, und der Haltering (13) ein Außengewinde (26) aufweist sowie das Anschlussteil (2) ein korrespondierendes Innengewinde (27) aufweist, wobei der Haltering (13) in das Anschlussteil (2) einschraubbar ist.

10. Knickbarer Sanitärschlauch nach einem der Ansprüche 3-9,
**dadurch gekennzeichnet, dass**
der Zapfen (7) vorzugsweise zylinderförmig oder konusförmig ausgebildet ist.

11. Knickbarer Sanitärschlauch nach einem der o. g. Ansprüche,
**dadurch gekennzeichnet, dass** an Sanitärschlauch endseitig ein Nippel (19) angespritzt ist, der mit einer nach außen vorstehenden radialen Schulter (20) versehen ist wobei der Nippel (19) die auf dem Sanitärschlauch (1) daran angrenzend sitzende Schraubhülse (21) überkragt, welche vorzugsweise über eine Schraubverbindung mit der Hülse (6) befestigt ist und dabei die radiale Schulter (20) des Nippels (19) an die Innenfläche (24) der Hülsenschulter (25) anpresst und so den Sanitärschlauch (1) gegen die Hülse (6) radial abdichtet.

12. Knickbarer Sanitärschlauch nach Anspruch 11,
**dadurch gekennzeichnet, dass**
der angespritzte Nippel (19) aus Kunststoff gebildet ist und alle anderen Teile, außer dem Dichtring (11) und dem Sanitärschlauch (1), vorzugsweise aus Metall.

## Claims

1. A kinkable shower hose (1), comprising a hand shower including a shower head and connected at the shower hose through a connection coupling, wherein the connection coupling (K) includes a first assembly (a) for connecting the hand shower and a second assembly (B) for connecting the shower hose (1), wherein the hand shower is connected with the shower hose (1) through the connection coupling (K) in an axially rotatable manner, wherein the connection coupling (K) includes a ball joint which includes a ball head (3) and a pivot bearing (4) receiving the ball head (3) for pivotably connecting the two assemblies (A, B) so that the two assemblies (A, B) of the connection coupling (K) are pivotable relative to one another in three dimensions.

2. The kinkable shower hose (1) according to claim 1, wherein the first assembly (A) includes the pivot bearing (4) for connecting the hand shower and the second assembly (B) includes the ball head (3) for connecting the shower hose (1).

3. The kinkable shower hose (1) according to one of the preceding claims, wherein the second assembly (B) includes a jacket (6) which extends as a diameter reduced pinion (7) at which the ball head (3) is preferably attached through a screw connection.

4. The kinkable shower hose (1) according to claim 3, wherein the ball head (3) and the pinion (7) include pass through bore holes (8, 9) whose diameters correspond to at least the inner diameter of the shower hose (1).

5. The kinkable shower hose (1) according to one of the preceding claims, wherein the first assembly (A) includes a connection component (2) which includes a central pass through bore hole (10), whose inner diameter is preferably greater than the inner diameter of the pinion (7) and the ball head (3).

6. The kinkable shower hose (1) according to one of the preceding claims, wherein the connection component (2) includes a threaded section (28), preferably an inner thread for attaching the hand shower and a concentrically arranged partial ball shaped recess (5) which forms the pivot bearing (4), wherein the central pass through bore hole (10) extends between the threaded section (28) and the recess (5).

7. The kinkable shower hose (1) according to one of the preceding claims, wherein the ball head (3) is sealed in the pivot bearing (4) of the connection component (2) with a seal ring (11), in particular a radial shaft seal ring or a circular seal ring towards the pivot bearing (4), wherein the connection component (2) includes a respective radial recess (12) for receiving the seal ring (11).

8. The kinkable shower hose (1) according to one of the preceding claims, wherein the ball head (3) is supported through a thread able support ring (13) relative to the pivot bearing (4) in the connection component (2), wherein the support ring (13) preferably includes an inner cone (14) that is oriented towards the pivot bearing (4) as a contact surface for the pinion (7) in order to limit the three dimensional pivoting of the two assemblies (A, B).

9. The kinkable shower hose (1) according to claim 8, wherein the support ring (13) closes the seal ring (11) towards the pivot area (15) in that the bottom side (16) of the support ring (13) contacts the seal ring (11) and reaches beyond the seal ring (11) and the smaller of the two diameters of the inner cone (14) corresponds to the contour of the ball head (3) and is smaller than the ball head diameter and the support ring (13) includes an exterior thread (26) and the connection component (2) includes a corresponding inner thread (27), wherein the support ring (13) is configured to be threaded into the connection component (2).

10. The kinkable shower hose (1) according to one of the claims 3 - 9, wherein the pinion (7) is preferably configured cylindrical or cone shaped.

11. The kinkable shower hose (1) according to one of the preceding claims, wherein a nipple (19) is integrally injection molded at the end of the shower hose and provided with a outward protruding radial shoulder (20), wherein the nipple (19) reaches beyond the threaded sleeve (21) arranged adjacent on the shower hose (1), wherein the threaded sleeve (21) is preferably attached with the sleeve (6) through a threaded connection and thus presses the radial shoulder (20) of the nipple (19) onto the inner surface (24) of the sleeve shoulder (25), thus radially sealing the shower hose (1) against the sleeve (6).

12. The kinkable shower hose (1) according to claim 11, wherein the integrally molded nipple (19) is formed from plastic material and all other components besides the seal ring (11) and the shower hose (1) are preferably made from metal.

## Revendications

1. Flexible sanitaire pliable (1) avec une douchette qui est pourvue d'une pomme de douche et raccordée au flexible sanitaire par l'intermédiaire d'un accouplement de raccordement, dans lequel l'accouplement de raccordement (K) comprend un premier module (A) pour le raccordement de la douchette et un deuxième module (B) pour le raccordement du flexible sanitaire (1), dans lequel la douchette est reliée au flexible sanitaire (1) de manière rotative sur un axe grâce à l'accouplement de raccordement (K),
**caractérisé en ce que**
l'accouplement de raccordement (K) présente une articulation sphérique qui comprend une tête sphérique (3) et une articulation à rotule (4) logeant cette tête sphérique (3), pour le raccordement pivotant des deux modules (A, B), de telle sorte que les deux modules (A, B) de l'accouplement de raccordement (K) peuvent pivoter dans l'espace l'un par rapport à l'autre.

2. Flexible sanitaire pliable (1) selon la revendication 1,
**caractérisé en ce que**
le premier module (A) présente l'articulation à rotule (4) pour le raccordement de la douchette et le deuxième module (B) présente la tête sphérique (3) pour le raccordement du flexible sanitaire (1).

3. Flexible sanitaire pliable (1) selon l'une quelconque des revendications précédentes,
**caractérisé en ce que**
le deuxième module (B) comprend une douille (6) qui se prolonge sous la forme d'un tenon (7) de diamètre réduit, auquel est fixée la tête sphérique (3), de préférence par l'intermédiaire d'un raccordement par filetage.

4. Flexible sanitaire pliable (1) selon la revendication 3,
**caractérisé en ce que**
la tête sphérique (3) et le tenon (7) présentent des trous traversants (8, 9) dont les diamètres correspondent au moins au diamètre intérieur du flexible sanitaire (1).

5. Flexible sanitaire pliable selon l'une quelconque des revendications précédentes,
**caractérisé en ce que**
le premier module (A) comprend une pièce de raccordement (2) présentant un trou traversant central (10), dont le diamètre intérieur est de préférence supérieur à celui du tenon (7) et à celui de la tête sphérique (3).

6. Flexible sanitaire pliable selon l'une quelconque des revendications précédentes,
**caractérisé en ce que**
la pièce de raccordement (2) présente un segment fileté (28), de préférence un taraudage, pour la fixation de la douchette et un évidement partiellement sphérique (5) disposé de manière concentrique qui forme l'articulation à rotule (4), le trou traversant central (10) s'étendant entre ledit segment fileté (28) et ledit évidement (5).

7. Flexible sanitaire pliable selon l'une quelconque des revendications précédentes,
**caractérisé en ce que**
dans l'articulation à rotule (4) de la pièce de raccordement (2), la tête sphérique (3) est rendue étanche par rapport à l'articulation à rotule (4) au moyen d'une bague d'étanchéité (11), en particulier un joint d'arbre radial ou un joint torique, dans lequel la pièce de raccordement (2) présente un évidement radial (12) correspondant pour le logement de la bague d'étanchéité (11).

8. Flexible sanitaire pliable selon l'une quelconque des revendications précédentes,
**caractérisé en ce que**
la tête sphérique (3) est maintenue contre l'articulation à rotule (4) à l'intérieur de la pièce de raccordement (2) au moyen d'une bague d'arrêt vissable (13), la bague d'arrêt (13) présentant de préférence, en tant que surface de butée pour le tenon (7), un cône intérieur (14) dirigé vers l'articulation à rotule (4) afin de limiter le pivotement dans l'espace des deux modules (A, B).

9. Flexible sanitaire pliable selon la revendication 8,
**caractérisé en ce que**
la bague d'arrêt (13) isole la bague d'étanchéité (11) de la zone de pivotement (15) **en ce que** la face inférieure (16) de la bague d'arrêt (13) repose sur la bague d'étanchéité (11) et fait saillie par rapport à celle-ci et **en ce que** le plus petit des deux diamètres du cône intérieur (14) correspond au contour de la tête sphérique (3) et est plus petit que le diamètre de la tête sphérique, et **en ce que** la bague d'arrêt (13) présente un filetage (26) et la pièce de raccordement (2) présente un taraudage (27) correspondant, la bague d'arrêt (13) pouvant être vissée dans la pièce de raccordement (2).

10. Flexible sanitaire pliable selon l'une quelconque des revendications 3 à 9,
**caractérisé en ce que**
le tenon (7) est réalisé de préférence sous une forme cylindrique ou conique.

11. Flexible sanitaire pliable selon l'une quelconque des revendications précédentes,
**caractérisé en ce que**
un nipple (19) pourvu d'un épaulement radial (20) dépassant vers l'extérieur est appointé à une extrémité du flexible sanitaire, dans lequel le nipple (19) fait saillie par rapport à la douille filetée (21) logée de manière adjacente sur le flexible sanitaire (1), laquelle douille filetée est fixée à la douille (6) de préférence par l'intermédiaire d'un raccordement par filetage et pousse l'épaulement radial (20) du nipple (19) contre la surface interne (24) de l'épaulement de douille (25) rendant le flexible sanitaire (1) ainsi étanche radialement par rapport à la douille (6).

12. Flexible sanitaire pliable selon la revendication 11,
**caractérisé en ce que**
le nipple (19) appointé est fait de matière plastique et tous les autres éléments, à l'exception de la bague d'étanchéité (11) et du flexible sanitaire (1), sont de préférence faits de métal.
